# EUROPEAN PATENT APPLICATION

(11) **EP 2 306 376 A1**
(43) Date of publication of application: **06.04.2011**
(21) Application number: 09170886.7
(22) Date of filing: 21.09.2009
(51) Int. Cl.: G06Q 10/00

(54) **Electronic device and method of controlling the same for determination of free time periods**

(71) Applicant: RESEARCH IN MOTION LIMITED, Waterloo, Ontario N2L 3W8 (CA)
(72) Inventor: Fritzley, Eric Allan, Waterloo Ontario N2L 5Z5 (CA); Jain, Rohit Rocky, Waterloo Ontario N2L 5Z5 (CA); Logan, Adrian Michael, Waterloo Ontario N2L 5Z5 (CA)
(74) Representative: Rickard, David John

(57) **Abstract**

A method of controlling an electronic device includes retrieving, from at least one database comprising a plurality of calendared events, calendared events for a calendar day and for the calendar day, determining free time periods between an earliest of a start time of a working day and an end time of a first calendared event and a latest of the end time of the working day and a start time of a last calendared event, and rendering the calendared events and the determined free time periods in a time-ordered list on a display of the electronic device.

## Description

The present invention relates generally to calendar applications and to determination of free time slots in an agenda.

Portable electronic devices including, for example, smart telephones and wireless PDAs are becoming increasingly common and typically integrate functions of personal information management such as calendaring and data communications such as email, World Wide Web browsing and telecommunications in a single device. Such devices run on a wide variety of networks from data-only networks such as Mobitex and DataTAC to complex voice and data networks such as GSMIGPRS, CDMA, EDGE, UMTS AND W-CDMA networks.

Calendar applications permit the user of the portable electronic device to schedule and review calendared events such as appointments and meetings on a visual display such as a liquid crystal display (LCD) screen. Calendared events can typically be viewed in any of a variety of layouts including, for example, a day view, a week view, a month view or an agenda view. An agenda view is typically a list of calendared events with date information, time information, and other identifying information such as subject information in the form of a table, to allow the user to quickly identify the calendared event in the list. Such an agenda is advantageous in that the user is provided with a convenient list of calendared events. To gain a better appreciation of the user's time schedule, the user is forced to switch to a day view, for example, to more quickly determine time available. Improvements in electronic device and for scheduling calendar events are desirable.

### GENERAL

According to one aspect, there may be provided a method of controlling an electronic device, the method comprising: retrieving, from at least one database comprising a plurality of calendared events, calendared events for a calendar day; and for the calendar day determining free time periods between an earliest of a start time of a working day and an end time of a first calendared event and a latest of the end time of the working day and a start time of a last calendared event; and rendering the calendared events and the determined free time periods in a time-ordered list on a display of the electronic device.

According to another aspect, there may be provided an electronic device comprising: a display device; a memory; a processor operably connected to the display device and the memory, the processor being configured to execute computer-readable code stored in the memory to cause the electronic device to retrieve, from at least one database comprising a plurality of calendared events, calendared events for a calendar day; determine free time periods, for the calendar day, between an earliest of a start time of a working day and an end time of a first calendared event and a latest of the end time of the working day and a start time of a last calendared event; and render, for the calendar day, the calendared events and the determined free time periods in a time-ordered list on a display of the electronic device.

According to another aspect, there may be provided a computer program product for rendering calendared events on a display of an electronic device, the computer program product comprising a computer-readable medium having computer-readable code embodied therein executable by a processor of the electronic device to cause the electronic device to retrieve, from at least one database comprising a plurality of calendared events, calendared events for a calendar day; determine free time periods, for the calendar day, between an earliest of a start time of a working day and an end time of a first calendared event and a latest of the end time of the working day and a start time of a last calendared event; and render, for the calendar day, the calendared events and the determined free time periods in a time-ordered list on the display.

### BRIEF DESCRIPTION OF THE DRAWINGS

Embodiments of the present invention will now be described, by way of example only, with reference to the attached Figures, wherein:
FIG. 1 is an example of a block diagram of an embodiment of a portable electronic device;
FIG.2 is an example of a block diagram of a communication subsystem component of FIG. 1;
FIG. 3 is an example of a block diagram of an implementation of a node of a wireless network;
FIG. 4 is an example of a block diagram illustrating components of an configuration of a host system with which the portable electronic device can communicate;
FIG. 5 is a flowchart showing the steps in a method for controlling an electronic device according to an embodiment of the present invention;
FIG. 6 is a flowchart showing the further steps of a block of FIG. 5;
FIG. 7 is an example of a screen showing a list of calendared events display on the display of the portable electronic device;
FIG. 8 is another example of a screen showing a list of calendared events displayed on the portable electronic device; and
FIG. 9 is an example of a menu screen showing user options for the calendar application.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered to be limited to the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

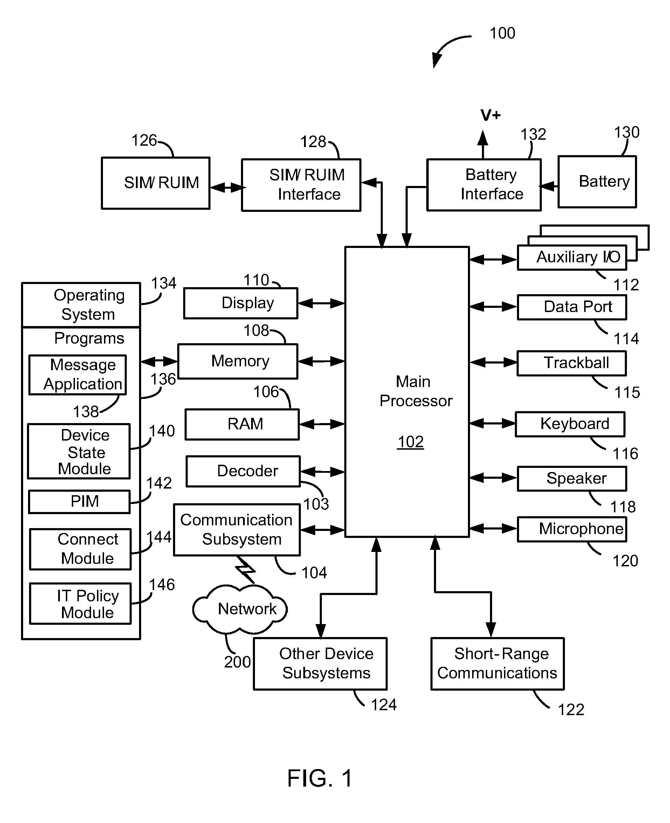

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to FIG. 1 through FIG. 4.

Referring first to FIG. 1, shown therein is an example of a block diagram of an embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this example embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 to 146 which are described in more detail below. The operating system 134 and the software components 136 to 146 that are executed by the main processor 102 are typically stored in a persistent store such as the memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

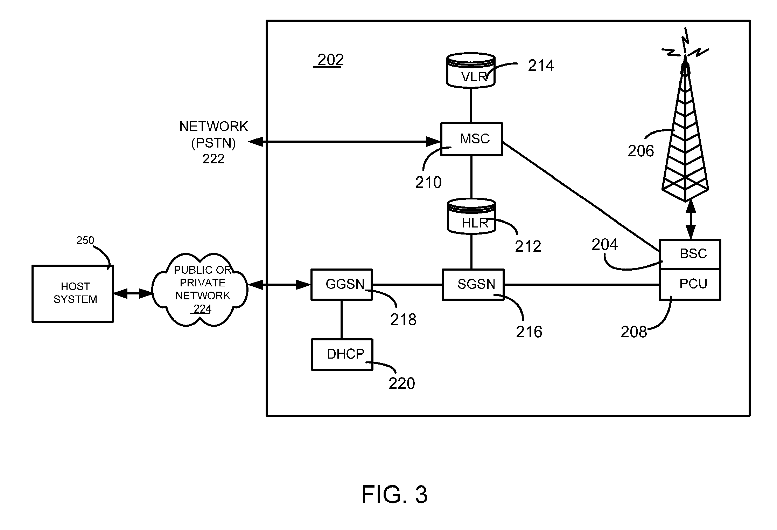

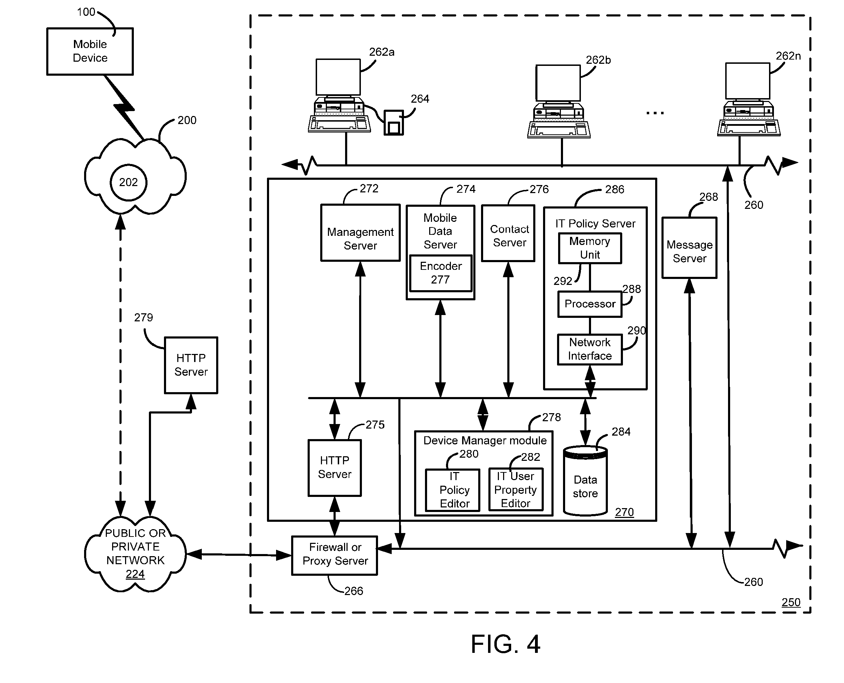

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in FIG. 3 and FIG. 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100 and still others can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 can be an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

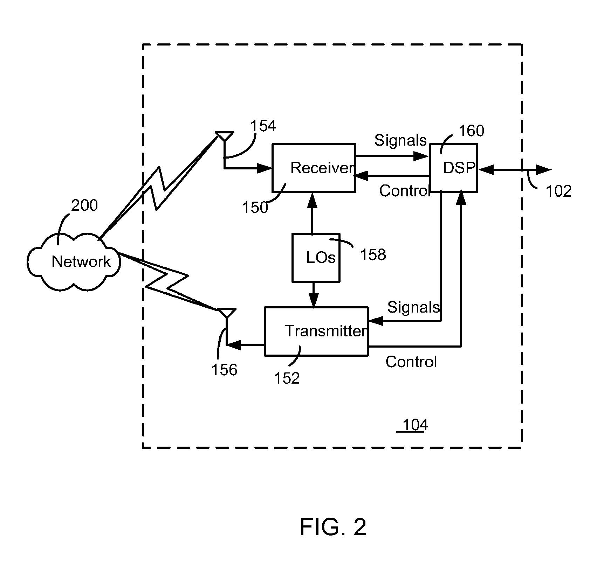

Referring now to FIG. 2, an example of a block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in FIG. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, an example of a block diagram of an implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to FIG. 4, shown therein is an example of a block diagram illustrating components of an configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this configuration. More generally, the host system 250 may represent a smaller part of a larger network (not shown) of the organization, and may comprise different components and/or be arranged in different topologies than that shown in the embodiment of FIG. 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some examples of implementations of the message server 268 include a Microsoft Exchange™ server, a Lotus Domino™ server, a Novell Groupwise™ server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted messages or signed messages or both encrypted and signed messages, minimum encryption key sizes, whether outgoing messages must be encrypted or signed or encrypted and signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data items of interest to the user, such as, but not limited to, e-mail, contacts, calendar events, voice mails, appointments, and task items. PIM applications include, for example, calendar, address book, tasks and memo applications.

It will be appreciated that a calendar application is used for providing a graphical user interface (GUI) for the user to create calendared events and for storage of the calendared events in a database, when executed by the microprocessor 102. The calendar application is also used for displaying calendared events such as appointments, lectures, exams, movies, meetings, performances, dinners, ceremonies, etc. as described below. Each calendared event includes a variety of information including a date and time of the event. The terms date/time, working day and calendar day are used throughout the present description. It will be appreciated that the term date/time refers to time and date, working day refers to time period within a calendar day during which a user is available for calendared events, and calendar day refers to a date.

The display 110 of the portable electronic device 100 can be configured by a user to display visual representations of the calendared events that are stored in a database. The calendared events are displayed in a user-selected one of various calendar views including a day view, a week view, a month view and an agenda view. The agenda view provides a list of calendared events with date information, time information, and other identifying information such as subject information in the form of a table, to allow the user to quickly identify calendared events in the list.

Selection of the calendar application by the user causes execution of the calendar application by the microprocessor 102 and a user-selected one or default one of the calendar views is displayed on the display 110. In the agenda calendar view, a list of calendared events is displayed beginning at the current date according to an internal clock of the portable electronic device 100. The calendared events scheduled for different calendar days are listed under different day headings, with all calendar events for a specific day listed under the same calendar day heading. The user can scroll ahead in time in the agenda view to show further future calendared events using, for example, the trackball 115. Similarly, the user can scroll back in time in the agenda view to show past calendared events using, for example, the trackball 115.

Each calendared event in the list includes information such as the start time of the calendared event, the end time of the calendared event, the subject information relating to the calendared event, and location information relating to the calendared event. It will be appreciated that the list of calendared events is not limited to this information and other information can be presented. For example, rather than displaying the end time of the calendared event, the duration of the event may be displayed. It is also possible that some information such as location information is not included. Further, an indication of whether or not a reminder is set for the calendared event and an indication that the calendared event is a recurring event can be displayed.

The following generally describes an apparatus and a method of controlling an electronic device, the method comprising retrieving, from at least one database comprising a plurality of calendared events, calendared events for a calendar day, and for the calendar day, determining free time periods between an earliest of a start time of a working day and an end time of a first calendared event and a latest of the end time of the working day and a start time of a last calendared event; and rendering the calendared events and the determined free time periods in a time-ordered list on a display of the electronic device.

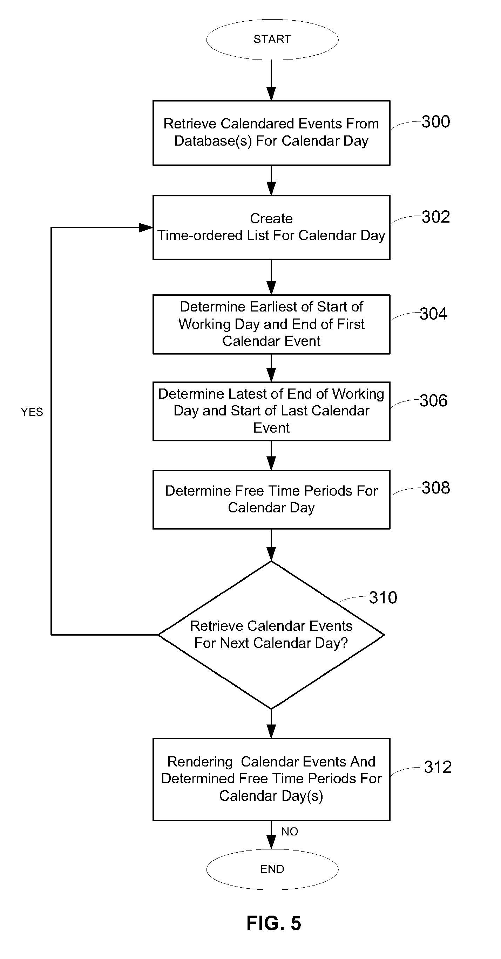

Reference is now made to FIG. 5 to describe an embodiment of a method of the present application. It will be appreciated that each of the steps of FIG. 5 is carried out by routines or subroutines of the calendar software executed by the microprocessor 102. Coding of software for carrying out such a method is within the scope of a person of ordinary skill in the art given the present description. Upon selection of the calendar application from a menu screen (not shown) by a user of the portable electronic device 100, the microprocessor 102 executes a routine of the calendar application. For the purpose of the present example, the calendar application default view is the agenda view. It will be appreciated, however, that the default view can be any view, and the view can be changed from any other view to the agenda view by user selection of an agenda view option in a calendar options menu referred to below.

As indicated above, a list of calendared events is rendered in the agenda view. To display this list, all calendared events for a current calendar day are retrieved 300 from one or more databases in which the calendared events are stored. After retrieving 300 the calendared events for a calendar day, a single time-ordered list of calendared events for the current calendar day is created 302, thereby placing each of the calendared events in order of start time of the calendared events.

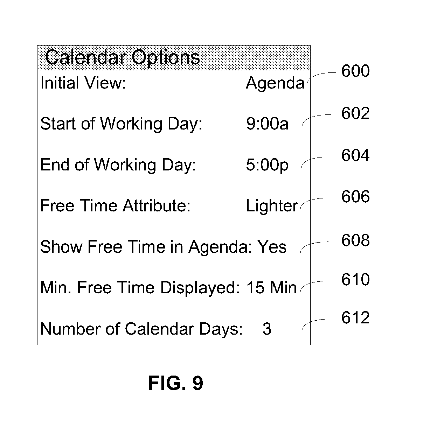

Next, the earliest of a start time of a working day of the current calendar day and an end time of a first calendar event of the current calendar day is determined 304. After determining 304 the earliest of the start time of the working day and the end time of the first calendar event, the latest of the end of the working day of the current calendar day and the start of a last calendar event of the current calendar day is determined 306. Next, free time periods for the current calendar day are determined 308 between the earliest of a start time of the working day and the end time of the first calendared event and the latest of the end time of the working day and the start time of a last calendared event. When all the free time periods for the current calendar day have been determined 308, a determination is made whether calendar events for a next calendar day are to be retrieved 310. Such determination can be based on user preference of how many calendar days to show (see 612 of Figure 9) or other criterion (e.g., screen area available). When it is determined that calendar events for a next calendar day are to be retrieved 310, each of determining 304 of the earliest of the start time of the working day and an end time of a first calendar event, determining 306 of the latest of the end of the working day and the start of a last calendar event, and determining free time periods is repeated for the next calendar day. It will be appreciated that the number of calendar days for which free time periods will be determined may be configured to a default number (for example three, one, etc) and may be changed by a user of the portable electronic device. When the free time periods for the configured number of calendar days have been determined 310, the calendar events and the determined free time periods for each calendar day are rendered 312 in a time-ordered list on the display 110 of the portable electronic device 100, thereby providing the user with free time slots available to schedule further calendar events.

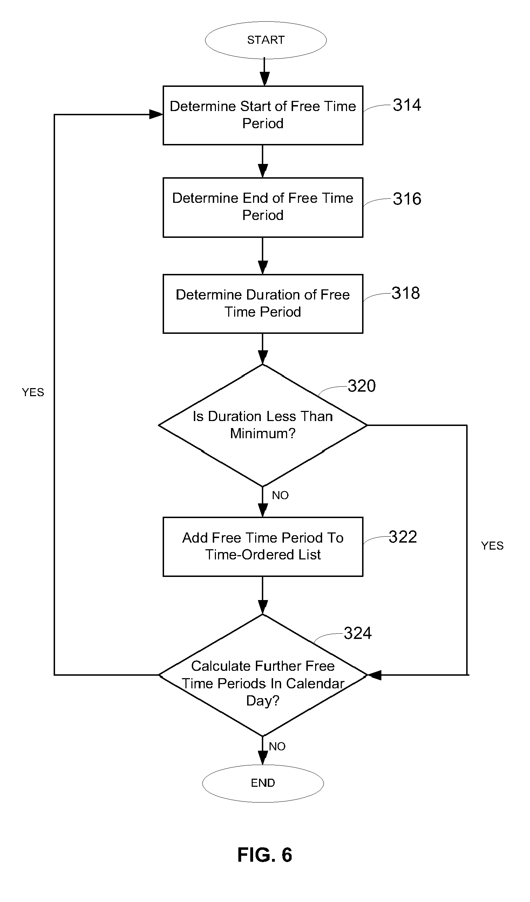

The determination 308 of free time periods for a calendar day will now be described with reference to FIG. 6. To determine 314 the start of the first free time period for the current calendar day a search is conducted for the earliest of the start time of the working day for the current calendar day and the end time for the first calendar event for the current calendar day according to the internal clock of the portable electronic device 100. Thus, when no calendared event is scheduled before the start time of the working day (i.e., calendar events with an end time before the start time of the working day of the current calendar day) or that is in progress at the start time of the working day, the start time of the first free time period is determined to be the start of the working day of the current calendar day. When there are calendared events scheduled before the start time of the working of the current calendar day or a calendared event is in progress at the start time of the working day of the current calendar day, the start time of the first free time period is determined to be the end time of the first calendar event of the current calendar day.

After determining 314 the start time of the first free time period, the end time for the first free time period is determined 316. In this case, the first one of the start time of a non-conflicting calendared event, the latest of the end time of the working day and the start time of the last calendar event, and the earliest start time of a set of conflicting calendar events is determined. Thus, if there are no further calendar events for the current calendar day, the end time of the free time period is determine to be the end time of the working day of the current calendar day. On the other hand, if there are other calendared events for the current calendar day, the next earliest one of either a start time of a non-conflicting calendared event, the earliest start time of a set of conflicting calendared events or the latest of the end time of the working day and the start time of the last calendar event of the current calendar day is determined to be the end time of the first free time period.

The duration of the free time period is then determined 318 by subtracting the start time of the free time period from the end time of the free time period. The determined duration is then compared 320 to a minimum duration. For any free time periods that have a duration less than the minimum duration or that have an end time that is on or before the current time according to the internal clock of the portable electronic device 100, these time periods are not added to the time ordered-list. Instead, the process proceeds to step 324. However, for free time periods that have a duration greater than or equal to the minimum duration of time, the free time period is added 322 to the time-ordered list. Very short free time periods are therefore not displayed. Thus, the time-ordered list that is rendered in an agenda view is not cluttered with very short free time periods that, for example, are too short for scheduling further calendared events within or with past free time periods. It will be appreciated that the minimum duration can be set to zero so that all free time periods are rendered in the time-ordered list regardless of their durations. Also, the minimum duration can be user-selectable in a calendar graphical user interface menu. Showing free time periods between back-to-back calendar events can be prohibited, even when the minimum duration of a free time period is set to zero.

After a determination is made 322 whether or not to add the first free time period to the time-order list, a determination is made 324 whether further free time periods for the current calendar day are to be determined. When a determination is made 324 that further free time periods are to be determined for the current calendar day, steps 314, 316, 318, 320 and 322 are each repeated for the next time period.

When all free time periods of the current calendar day and other calendar days for which calendar events are to be retrieved are determined and all free time periods having a duration greater than or equal to the minimum duration are added to the time-ordered list, the time-ordered list is rendered 312 on the display 110 of the portable electronic device 100, thereby providing the user with a visual indication of the free time slots that are available for scheduling of further calendar events.

It will be appreciated that in the present embodiment, free time periods are only shown beginning at the current date/time according to the internal clock. Free time periods are not shown for past date/times.

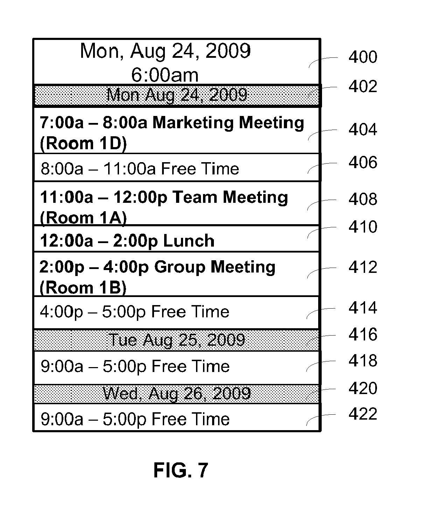

Referring now to Figure 7, an example of an agenda view showing a list of calendared events 404, 408, 410, 412 for three calendar days 402, 416, 420 according one embodiment is shown. The start times and end times of each of the calendared events 404, 408, 410, 412 for each of the calendar days 402, 416, 420 are rendered. Also, the start times and end times of each of the free time periods 406, 414, 418, 422 are rendered. In this example, the free time periods 406, 414, 418, 422 are rendered with a different display attribute to facilitate easy identification. For example, each of the free time periods 406, 414, 418, 422 is rendered in a normal weight font rather than a bold font. Other display attributes can be used for display. For example, the free time periods 406, 414, 418, 422 can be shown in a different font (e.g., "Times New Roman" vs "Arial") or in bold, in italics, in an alternative colour or can be rendered with any other suitable differentiating display attribute. It will be appreciated that in the example of FIG. 7 only four calendared events are shown and four free time periods are shown, although more or fewer may exist. A header 400 is shown, indicating the current date and time.

Continued reference is now made to FIG. 5 and FIG. 7. In the example of FIG. 7, four calendared events 404, 408, 410, 412 are retrieved 300 from the database and a single time ordered list is created 302 (Figure 5). It will be appreciated that the working day is configured to a start time of 9:00 AM and an end time of 5:00PM for the present example. Next, the earliest of the start time of working day of the current calendar day 402 and the end time of the first calendar event 404 of the current calendar day 402 is then determined 304. In this example, the start of the working day is 9:00 AM and the first calendar event 404 of the current calendar day 402 is scheduled to end at 8:00 AM, therefore the start of the first free time period 406 is determined to be 8:00 AM. In effect the free time period 406 has been extended in length (from the normal start of the work day at 9:00 AM to the earlier 8:00 AM), as it is assumed that the user is available after the calendared event "Marketing Meeting" scheduled from 7:00 AM to 8:00 AM. This avoids having time periods appear to be missing from the agenda view, which would be the case if the free time period 406 were not extended. (The period from 8:00 AM to 9:00 AM would be unaccounted for.) One result is therefore an agenda view filled entirely with contiguous calendared events and/or free time periods (aside from any shorter than minimum intervals that are not designated as free time periods). It will be appreciated that any past free time periods are not determined.

Next, the latest of the end time of the working day of the current calendar day 402 and the start time of last calendar event 412 of the current calendar day 402 is determined 306. In this example, the end time of the working day is 5:00PM and the last calendared event 412 of the current calendar day 402 ends at 4:00PM, free time periods 406, 414 between 8:00AM and 5:00PM are then determined 308 for the current calendar day 402.

Continued reference is now made to FIG. 6 and FIG. 7. To determine 308 the free time periods 406, 414 for the current calendar day 402, the start time of the first free time period is determined 314. In this example, the start time of the first free time period 406 is determined to be 8:00AM. Next, the end time of the first free time period 406 is determined 316. In this example, as the next calendared event 408 is scheduled to begin at 11:00AM, the end time of the first free time period 406 is determined 316 to be 11:00 AM, which is the start time of the next calendared event 408 of the current calendar day 402. After the end time of the first free time period 406 is determined, the duration of the first free time period 406 is determined 318. For the purposes of this example, the minimum duration is set at 15 minutes. In this example, the duration of the first free time period 406 is determined 320 to be 3 hours. Next, the duration of the first free time period is compared to the minimum duration at 320. In this example, because the first free time period 406 is greater in duration than the minimum duration, the first free time period is added 322 to the time order list. Next, the start time of the next free time period for the current calendar day 402 is determined. The second calendar event 410 is scheduled to end at 12:00 PM and the third calendar event is scheduled to start at 12:00 PM. Thus, the duration of the next free time period is determined 318 to be zero, which is less than the minimum duration, as determined at 320, and this is not added as a free time period to the time-ordered list. Next, the start time of the next free time period for the current calendar day 402 is determined. In this example, the third calendar event 410 is scheduled to end at 2:00 PM and the fourth calendar event is scheduled to start at 2:00 PM. Thus, the duration of the next free time period is determined 318 to be zero, which is less than the minimum duration, as determined at 320. This is not added as a free time period in the time-ordered list. Next, the start time of the next free time period for the current calendar day 402 is determined. In this example, the start time of the next free time period 414 is determined 316 to be 4:00 PM, which is the end time of the fourth calendared event 412. The duration of this next free time period 414 is then determined 320. As mentioned above, as the end time of the working day has been configured to 5:00PM in this example and the last calendared event 412 of the current calendar day 402 ends at 4:00PM, the end time of the next free time period is determined to be 5:00PM. After the end time of the next free time period 414 is determined, the duration of the next free time period 414 is determined 318. In this example, the duration of the next free time period 414 is determined 318 to be 1 hour. This duration is then compared 318 to the minimum duration and because the duration is greater than the minimum duration, the next free time period 414 is added 322 to the time-ordered list. In this example, because there are no further calendar events in the current calendar day 402 and the end time of the working day has passed, no further free time periods are determined.

Using the example that calendar application is configured to render two calendar days after the current calendar day 402, free time periods are determined for each of the next two calendar days 416, 422. In this example, only the current calendar day 402 includes calendared events 404, 408, 410, 412. The free time period 418 for the calendar day 416 after the current calendar day 402 is determined to span the full working day (i.e. from the start time of the working day (9:00 AM in this example) to the end time of the working day (5:00 PM in this example)). Similarly, the free time period 422 for the day after the next calendar day 422 is also determined to span the full length of the entire working day (i.e. 9:00 AM - 5:00 PM). Once the free time periods 406, 414, 418, 422 for the calendar days 402, 416, 420 are determined, the calendar events 404, 408, 410, 412 and the determined free time periods 406, 414, 418, 422 are rendered 312 on the display 110 of the portable electronic device 100.

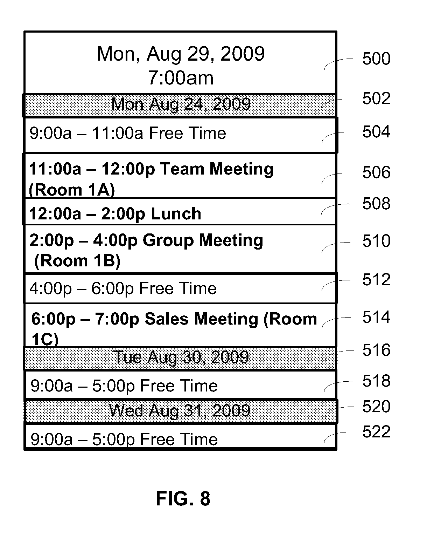

Referring now to Figure 8, an example of an agenda view showing a list of calendared events 506, 508, 510, 514 for three calendar days 502, 516, 520 according another embodiment is shown. The start times and end times of each of the calendared events 506, 508, 510, 514 for each of the calendar days 502, 516, 520 are rendered. Also, the start times and end times of each of the free time periods 504, 512, 518, 522 are rendered. Again, in this case, the free time periods 504, 512, 518, 522 are rendered with a different display attribute to facilitate easy identification. It will be appreciated that in the embodiment of FIG. 8 only four calendared events are shown and four free time periods are shown. A header 500 is shown, indicating the current date and time.

Continued reference is now made to FIG. 5 and FIG. 8. For the purpose of the present example, four calendared events 506, 508, 510, 514 are retrieved 300 from the database and a time ordered list is created 302 (Figure 5). For the purposes of this example, the working day is configured to start at 9:00 AM and end at 5:00PM. The earliest of the start time of working day for the current calendar day 502 and the end time of the first calendar event 504 of the current calendar day 502 is determined 304. In this example, because the start of the working day is 9:00 AM and the first calendar event 504 of the current calendar day 502 is scheduled to end at 12:00 PM, the start time of the first free time period 504 is determined 314 to be 9:00 AM, which is the start time of the working day. It will be appreciated that any past free time periods are not determined.

Next, the latest of the end time of the working day of the current calendar day 502 and the start time of last calendar event 516 of the current calendar day 502 is determined 306. In this example, as the end time of the working day is 5:00PM and the last calendared event 514 of the current calendar day 502 ends at 7:00PM, all free time periods 406, 414 between 9:00AM and 7:00PM are then determined 308 for the current calendar day 502. In this example, the free time period 512 has been extended in length (from the normal end of the work day at 5:00 PM to the later 6:00 PM), as it is assumed that the user is available between 5:00 PM and the start of the calendared event "Sales Meeting" scheduled from 6:00 PM to 7:00 PM. This avoids having time periods appear to be missing from the agenda view, which would be the case if the free time period 512 were not extended. (The period from 5:00 PM to 6:00 PM would be unaccounted for.) One result is therefore an agenda view filled entirely with contiguous calendared events and/or free time periods (aside from any shorter than minimum intervals that are not designated as free time periods).

Continued reference is now made to FIG. 6 and FIG. 8. To determine 308 the free time periods 504, 512 for the current calendar day 502, the start time of the first free time period 504 is determined 314. In this example, the start time of the first free time period 504 is determined 314 to be the start time of the working day, that is, 9:00AM. Next, the end time of the first free time period 504 is determined 316. As the next calendared event 506 is scheduled to begin at 11:00AM, the end time of the first free time period 504 is determined 316 to be the start time of the next calendar event 506, which is 11:00AM. After the end time of the first time period 504 is determined 316, the duration of the first free time period 504 is determined 318. For the purposes of this example, the minimum duration is set at 15 minutes. In this example, the duration of the first free time period 504 is determined 320 to be 2 hours, which is greater than the minimum duration determined at 320. Thus, the first free time period 504 is added 322 (to the time order list. As the end time of the working day of the current calendar day 502 is 5:00PM and the last calendared event 514 of the current calendar day 502 ends at 7:00PM, further free time periods for the calendar day 502 are determined 324. Next, the start time of the next free time period 512 for the current calendar day 502 is determined. In this example, the second calendar event 410 is scheduled to end at 12:00 PM and the third calendar event is scheduled to start at 12:00 PM. Thus, the duration is determined 318 to be zero, which is less than the minimum duration, as determined at 320, and this is not added as a free time period in the time-ordered list. Next, the start time of the next free time period for the current calendar day 402 is determined. In this example, the third calendar event 410 is scheduled to end at 2:00 PM and the fourth calendar event is scheduled to start at 2:00 PM. Thus, the duration is determined 318 to be zero, which is less than the minimum duration, as determined at 320, and this is not added to the time-ordered list. Next, the start time of the next free time period for the current calendar day 402 is determined. In this example, the start time of the next free time period 512 is determined to be 4:00PM. Next, the end time of the next free time period 512 is determined 316. Because the last calendar event 514 of the current calendar day 502 ends after the end time of the working day of the current calendar day 502, the end time of the next free time period 512 is determined to be the start time of the last calendar event 514 of the current calendar day 502. After the end time of the next free time period 512 is determined, the duration of the next free time period 512 is determined 320 to be 2 hours, which is greater than the minimum duration determined at 320. Thus, the next free time period 512 is added to the time order list. There are no further calendar events in the current calendar day 502 and the last calendar event 514 ends after the end of the working day, therefore no further free time periods are determined.

Using the example that calendar application has been configured to render two calendar days after the current calendar day 502, free time periods are determined for the next calendar day 516 after the current calendar day 502 and the calendar day 520 after the next calendar day 516. In this example, only the current calendar day 502 includes calendared events 506, 508, 510, 512, the free time period 518 for the calendar day 516 after the current calendar day 502 is determined to span the full working day (i.e. from the start time of the working day (9:00 AM in this example) to the end time of the working day (5:00 PM in this example)). Similarly, the free time period 522 for the day after the next calendar day 520 is also determined to span the full length of the entire working day (i.e. 9:00 AM - 5:00PM). Once the free time periods 504, 512, 518, 522 for the calendar days 502, 516, 520 are determined, the calendar events 506, 508, 510, 514 and the determined free time periods 504, 512, 518, 522 are rendered 312 on the display 110 of the portable electronic device 100.

Referring to Figure 9, there is shown an example of a menu screen that has user options for the calendar application. The default view when a calendar application is selected may be selected by a user. For example, when a user selects the Initial View Option 600, the user may be presented with a list (not shown) of Day View, Week View and Month View to choose from to set the default view to another calendar view. The Start of Working Day 602 and End of Working Day 604 in the calendar views are user-configurable by selecting the Start of Working Day 602 or End of Working Day 604 options and using, for example, the trackball 115 to change the time listed. It will be appreciate that changing the times of the Start of Working Day 602 or End of Working Day 604 may or may not affect the times determined and shown in FIG. 7 and FIG. 8. Changing either of these options may cause the execution of the method of FIG. 5 and FIG. 6 again to thereby recalculate the free time periods for rendering on the display 110 of the portable electronic device 100. The font attribute of the free time rendered on the display 100 is also configurable user selection of the Free Time Attribute 606 option.

Furthermore, the user may be also be provided with the option to turn off or on the free time in the agenda view depending on user preferences by toggling between Yes and No in the Show Free Time Agenda 608 option and can set the minimum duration of a free time period for display by selecting the "Min. Free Time Displayed" option 610 and increasing or decreasing the minimum duration (e.g., 15 minutes, 30 minutes, 5 minutes, etc). The number of calendar days rendered in the agenda view may also be set by selecting the "Number of Entries" option 612 and increasing or decreasing the number by using, for example, the trackball 115.

In another embodiment, free time periods are determined and added to the time-ordered list irrespective of the minimum duration (selected at option 610). Then, the durations of free time periods are compared to the minimum duration, and a free time period is not displayed in the agenda view when its duration is less than the minimum duration. Thus, shorter than minimum free time periods exist in the time-ordered list, but are simply not rendered on the agenda view of the time-ordered list.

Advantageously, when a calendar event is scheduled before the start of the working day or after the end of the working day of a calendar day, the working day is extended and free time periods in which calendared events are not scheduled are determined for the extended working day for the calendar day. The calendared events for calendar days are provided to the user along with the free time periods in a time-ordered list. The user or other users can therefore schedule new appointments in free time periods that are available. A quick, "at a glance" view of the list provides information to the user, explicitly showing free time available so that the user can easily find an appropriate length of available free time for scheduling a further meeting or appointment. This obviates the need to switch between different views to schedule a further meeting or appointment, which reduces user interaction time with the device. Thus, the device use time is reduced in scheduling further meetings and appointments, reducing power consumption and battery use of the portable electronic device, thereby extending the battery life of the portable electronic device. In addition, in the case of a first user wishing to schedule a calendar event with a second user, precursory communications between the users to clarify free time durations can be reduced when the second user's free time is displayed to the first user as extended. For example, the first user does not have to call the second user to confirm that the second user is free outside the normal work day (e.g., from 5:00 PM to 6:00 PM, in Figure 8). Without such extension of free time, additional battery power would be wasted to place such clarifying calls.

In the preceding description, for purposes of explanation, numerous details are set forth in order to provide a thorough understanding of the embodiments of the invention. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

Embodiments of the invention can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention can also be stored on the machine-readable medium. Software running from the machine-readable medium can interface with circuitry to perform the described tasks.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A method of controlling an electronic device, the method comprising:
retrieving, from at least one database comprising a plurality of calendared events, calendared events for a calendar day; and
for the calendar day,
determining free time periods between an earliest of a start time of a working day and an end time of a first calendared event and a latest of the end time of the working day and a start time of a last calendared event; and
rendering the calendared events and the determined free time periods in a time-ordered list on a display of the electronic device.

2. The method of claim 1, wherein the retrieving comprises retrieving calendared events for a plurality of calendar days.

3. The method of claim 2, wherein determining free time periods is repeated for each calendar day.

4. The method of any one of claims 1 to 3, wherein determining comprises determining a start time and an end time of each free time period.

5. The method of claim 4, wherein determining further comprises calculating a duration of each free time period by subtracting the start time from the end time.

6. The method of claim 5, comprising comparing the duration of each free time period to a minimum duration and wherein rendering comprises rendering only the free time periods having a duration greater than or equal to the minimum duration.

7. The method of claim 5, comprising comparing the duration of each free time period to a minimum duration and wherein rendering comprises rendering only the free time periods having a duration greater than the minimum duration.

8. The method of any one of claims 4 to 7, wherein the start time for each free time period is determined based on one of
the earlier of the start time of the working day and the end time of the first calendared event,
an end time of a non-conflicting calendared event, and
a latest end time of a set of conflicting calendared events.

9. The method of any one of claims 4 to 8, wherein the end time for each free time period is determined based on one of
the latest of the end time of the working day and the start time of the last calendared event,
a start time of the next one of the non-conflicting calendared events, and
an earliest start time of a next set of conflicting calendared events.

10. The method of any preceding claim, wherein the rendering comprises rendering attributes with the determined free time periods.

11. An electronic device comprising:
a display device;
a memory;
a processor operably connected to the display device and the memory, the processor being configured to execute computer-readable code stored in the memory to cause the electronic device to carry out the method according to any one of claims 1 to 10.

12. A computer program product comprising a computer-readable medium having computer-readable code embodied therein, the computer-readable code being executable by a processor of the electronic device to cause the electronic device to carry out the method according to any one of claims 1 to 10.

## Amended claims

### Amended claims in accordance with Rule 137(2) EPC.

**1.** A method of controlling an electronic device (100), the method comprising:
retrieving, from at least one database comprising a plurality of calendared events, calendared events for a calendar day; and
determining free time periods between an earliest of a start time of a working day of the calendar day and an end time of a first calendared event of the calendar day and a latest of the end time of the working day of the calendar day and a start time of a last calendared event of the calendar day; and
rendering the calendared events and the determined free time periods of the calendar day in a time-ordered list on a display (110) of the electronic device (100).

**2.** The method of claim 1, wherein the retrieving comprises retrieving calendared events for a plurality of calendar days.

**3.** The method of claim 2, wherein determining free time periods is repeated for each calendar day.

**4.** The method of any one of claims 1 to 3, wherein determining comprises determining a start time and an end time of each free time period.

**5.** The method of claim 4, wherein determining further comprises calculating a duration of each free time period by subtracting the start time from the end time.

**6.** The method of claim 5, comprising comparing the duration of each free time period to a minimum duration and wherein rendering comprises rendering only the free time periods having a duration greater than or equal to the minimum duration.

**7.** The method of claim 5, comprising comparing the duration of each free time period to a minimum duration and wherein rendering comprises rendering only the free time periods having a duration greater than the minimum duration.

**8.** The method of any one of claims 4 to 7, wherein the start time for each free time period is determined based on one of
the earlier of the start time of the working day of the calendar day and the end time of the first calendared event of the calendar day,
an end time of a non-conflicting calendared event of the calendar day, and
a latest end time of a set of conflicting calendared events of the calendar day.

**9.** The method of any one of claims 4 to 8, wherein the end time for each free time period is determined based on one of
the latest of the end time of the working day of the calendar day and the start time of the last calendared event of the calendar day,
a start time of the next one of the non-conflicting calendared events of the calendar day, and
an earliest start time of a next set of conflicting calendared events of the calendar day.

**10.** The method of any preceding claim, wherein the rendering comprises rendering attributes with the determined free time periods.

**11.** An electronic device (100) comprising:
a display device (110);
a memory (108, 110);
a processor (102) operably connected to the display device and the memory (108, 110), the processor (102) being configured to execute computer-readable code stored in the memory to cause the electronic device (100) to carry out the method according to any one of claims 1 to 10.

**12.** A computer program product comprising a computer-readable medium having computer-readable code embodied therein, the computer-readable code being executable by a processor (102) of the electronic device (100) to cause the electronic device (100) to carry out the method according to any one of claims 1 to 10.
